# FASCICULE DE BREVET EUROPEEN

(11) **EP 1 807 941 B1**
(45) Date de publication et mention de la délivrance du brevet: **09.12.2015**
(21) Numéro de dépôt: 05812367.0
(22) Date de dépôt: 24.10.2005
(51) Int. Cl.: H04B 7/185

(54) **SYSTEME DE COMMUNICATION RADIOFREQUENCE POUR AERONEF**
FUNKFREQUENZKOMMUNIKATIONSSYSTEM FÜR EIN FLUGZEUG
RADIO-FREQUENCY COMMUNICATION SYSTEM FOR AIRCRAFT

(30) Priorité: 02.11.2004 FR 0411635
(43) Date de publication de la demande: 18.07.2007
(73) Titulaire: AIRBUS OPERATIONS (SAS), 31060 Toulouse (FR)
(72) Inventeur: LAVIELLE, Isabelle, F-31130 Balma (FR); LE TOULLEC, Michel, F-31700 Blagnac (FR)
(74) Mandataire: Hauer, Bernard
(86) Numéro de dépôt international: PCT/FR2005/002640
(87) Numéro de publication internationale: WO 2006/048525

(56) Documents cités:
- EP-A- 1 249 814
- POPE, STEPHEN: "FAA moves ahead on VDL-3" AVIATION INTERNATIONAL NEWS, ASIAN AEROSPACE 2002, 28 février 2002 (2002-02-28), page 1, XP002332396
- "Technical Summary of RTA-44D VHF Data Radio (VDR)" HONEYWELL AEROSPACE ELECTRONIC SYSTEMS, juin 2004 (2004-06), pages 1-12, XP002332397

## Description

La présente invention concerne un système de communication radiofréquence pour un aéronef, en particulier pour un avion de transport.

Ce système de communication radiofréquence comporte au moins un dispositif émetteur/récepteur radiofréquence, apte à émettre et recevoir des données selon une norme VDL mode 3.

On sait qu'un mode de communication selon une norme VDL ("VHF Digital Link" en anglais, à savoir liaison numérique hyperfréquence) mode 3 est un mode de communication air/sol numérisé, qui permet de réduire la saturation de la bande hyperfréquence VHF, grâce à l'utilisation de canaux supplémentaires (une fréquence VHF supportant quatre canaux) dédiés à un ou plusieurs groupes d'utilisateurs pour la transmission phonie et/ou de données, suivant des configurations prédéfinies gérées par un système situé au sol.

La norme VDL mode 3 offre également des fonctions permettant de réduire des problèmes liés aux communications analogiques, en particulier les cas de transmissions simultanées, d'alternat pilote bloqué en émission, ou d'erreurs de saisie d'un canal.

Une telle norme VDL mode 3 est décrite notamment dans les publications suivantes :
- "NEXCOM Principles of opérations VDL mode 3", RTCA/DO-279, 5 mars 2002 ; et
- "TEAM Characteristics 750X v2-8-4", VHF Digital Radio, 2 mai 2003.

La présente invention concerne un système de communication radiofréquence pour un aéronef, permettant d'utiliser un tel mode de communication air/sol (selon la norme VDL mode 3) et de l'implémenter sur des moyens d'interface homme/machine de l'aéronef.

A cet effet, selon l'invention, ledit système de communication radiofréquence, du type comportant :
- au moins un dispositif émetteur/récepteur radiofréquence, apte à émettre et recevoir des données selon une norme VDL mode 3, ainsi qu'à recevoir des informations de statut d'une communication radiofréquence dudit dispositif émetteur/récepteur radiofréquence ; et
- un premier moyen d'interface homme/machine affichant au moins une information de configuration dudit dispositif émetteur/récepteur radiofréquence,
est remarquable en ce que ledit premier moyen d'interface homme/machine affiche également au moins l'une desdites informations de statut de la communication radiofréquence dudit dispositif émetteur/récepteur radiofréquence.

Ainsi, grâce à l'invention, ledit système de communication radiofréquence est en mesure de présenter à un opérateur de l'aéronef, et notamment au pilote, au moins une information de statut de la communication radiofréquence dudit dispositif émetteur/récepteur radiofréquence, en plus d'une information de configuration.

Dans le cadre de la présente invention :
- on entend par information de statut, une information relative à l'état de la liaison radio du dispositif émetteur/récepteur radiofréquence considéré (par exemple : possibilité d'émettre sur la fréquence sélectionnée, impossibilité d'utiliser certaines fonctionnalités de la liaison définies par la norme VDL mode 3, ...) ; et
- on entend par information de configuration, une information relative à la capacité de communication du dispositif émetteur/récepteur radiofréquence considéré (notamment : phonie seule ; transmission de données seule ; phonie et transmission de données).

Dans un mode de réalisation particulier, ledit système de communication radiofréquence comporte :
- une pluralité de dispositifs émetteurs/récepteurs radiofréquence, aptes à émettre et recevoir des données selon ladite norme VDL mode 3, ainsi qu'à recevoir des informations de statut des communications radiofréquence desdits dispositifs émetteurs/récepteurs radiofréquence ; et
- un deuxième moyen d'interface homme/machine susceptible d'afficher, sur requête d'un opérateur, une synthèse d'informations de statut relatives à la pluralité desdits dispositifs émetteurs/récepteurs radiofréquence.

Dans ce cas, avantageusement, lesdits premier et deuxième moyens d'interface homme/machine sont intégrés dans une seule et même unité d'interface. De préférence, cette unité d'interface est un dispositif de réglage de fréquences, tel qu'un panneau de gestion radiofréquence de type RMP ("Radio Management Panel" en anglais").

Dans un autre mode de réalisation, ledit deuxième moyen d'interface homme/machine est une unité de contrôle et d'affichage multifonction, de type MCDU ("Multipurpose Control and Display Unit" en anglais).

Par ailleurs, avantageusement :
- au moins un dispositif émetteur/récepteur radiofréquence est susceptible de recevoir une information représentative d'une fréquence communiquée par le contrôle aérien pour la communication dudit dispositif émetteur/récepteur radiofréquence ;
- ledit premier moyen d'interface homme/machine affiche, le cas échéant, ladite information représentative de ladite fréquence communiquée par le contrôle aérien ; et
- ledit premier moyen d'interface homme/machine comporte des moyens pour sélectionner et activer ladite fréquence sur ledit dispositif émetteur/récepteur radiofréquence.

De façon avantageuse, ledit premier moyen d'interface homme/machine comporte, de plus, au moins un indicateur susceptible d'indiquer le cas échéant que ladite fréquence a été communiquée par liaison de données. Cet indicateur permet au pilote de savoir si la fréquence affichée (qu'il peut activer) a été saisie manuellement (indicateur éteint par exemple) ou a été reçue par liaison de données (indicateur allumé par exemple).

En outre, ledit système de communication radiofréquence conforme à l'invention comporte, avantageusement :
- au moins un dispositif émetteur/récepteur radiofréquence qui est susceptible de déterminer une information de statut représentative de la possibilité d'utiliser ce dispositif émetteur/récepteur radiofréquence en émission ; et
- des moyens d'alerte pour alerter un opérateur de l'aéronef lorsqu'il tente d'utiliser ledit dispositif émetteur/récepteur radiofréquence en émission, alors que l'état de ladite information de statut correspond à une impossibilité d'utiliser ce dispositif émetteur/récepteur radiofréquence en émission, par exemple en raison d'une émission en cours par un autre dispositif émetteur/récepteur ou de la préemption du canal correspondant par le contrôle aérien.

Dans ce cas, de façon avantageuse, ledit système de communication radiofréquence comporte, de plus, un troisième moyen d'interface homme/machine, et lesdits moyens d'alerte sont susceptibles d'activer un signal sonore, par exemple dans un casque d'un pilote de l'aéronef, et d'activer l'affichage, sur ledit troisième moyen d'interface homme/machine, de ladite information de statut correspondant à une impossibilité d'utiliser ledit dispositif émetteur/récepteur radiofréquence en émission.

De préférence, lesdits moyens d'alerte activent le cas échéant simultanément ledit signal sonore et l'affichage de ladite information de statut, ce qui facilite l'association alerte/action par le pilote (relâchement de I`alternat).

Dans un mode de réalisation préféré, ledit troisième moyen d'interface est un dispositif électronique centralisé de surveillance d'aéronef, de type ECAM ("Electronic Centralized Aircraft Monitoring" en anglais).

Par ailleurs, dans un mode de réalisation particulier, ledit premier moyen d'interface homme/machine comporte un moyen, par exemple une touche, permettant à un opérateur de requérir la possibilité d'utiliser un dispositif émetteur/récepteur radiofréquence en émission. Ceci permet notamment à l'opérateur d'alerter le contrôle aérien (par liaison de données) d'un besoin urgent d'émettre (en phonie), lorsque le dispositif émetteur/récepteur radiofréquence est bloqué en mode réception uniquement (en phonie).

En outre, ledit système de communication radiofréquence comporte, de plus, un indicateur qui est associé à l'affichage de la fréquence active et qui est susceptible d'indiquer que la requête d'un opérateur telle que précitée (pour utiliser un dispositif émetteur/récepteur radiofréquence en émission) a été reçue par le contrôle aérien.

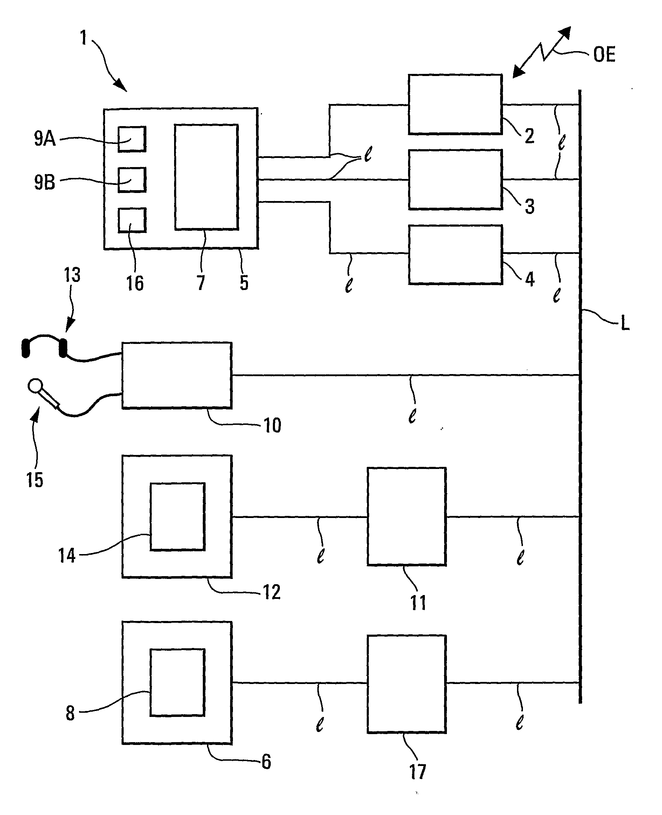

L'unique figure du dessin annexé fera bien comprendre comment l'invention peut être réalisée. Cette figure concerne un schéma synoptique d'un système de communication radiofréquence conforme à l'invention.

Le système de communication radiofréquence 1 conforme à l'invention et représenté schématiquement sur la figure, est monté sur un aéronef non représenté, en particulier un avion de transport, et est destiné à la communication radiofréquence entre ce système 1 et l'extérieur, notamment un poste de contrôle aérien situé au sol, comme illustré par une onde électromagnétique OE.

Pour ce faire, ledit système de communication 1 comporte :
- au moins un dispositif émetteur/récepteur radiofréquence 2, 3, 4 (tel qu'une radio de bord), apte à émettre et recevoir des données (sous forme d'ondes électromagnétiques OE) selon une norme VDL mode 3 du type précité, décrit notamment dans les documents précités, ainsi qu'à recevoir des informations de statut d'une communication radiofréquence dudit dispositif émetteur-récepteur 2, 3, 4. On entend par information de statut, une information relative à l'état de la liaison radio du dispositif émetteur/récepteur radiofréquence 2, 3, 4 considéré (par exemple : possibilité d'émettre sur la fréquence sélectionnée, ...) ; et
- un premier moyen d'interface homme/machine 5 relié audit dispositif émetteur/récepteur 2, 3, 4 et affichant au moins une information de configuration dudit dispositif émetteur/récepteur 2, 3, 4. On entend par information de configuration, une information relative à la capacité de communication du dispositif émetteur/récepteur radiofréquence 2, 3, 4 considéré (notamment : phonie seule ; transmission de données seule ; phonie et transmission de données).

Le dispositif émetteur/récepteur radiofréquence 2, 3, 4 peut être une radio de bord de type VDR ("VHF Data Radio" en anglais, à savoir une radio de données radiofréquence).

Selon l'invention, ledit premier moyen d'interface homme/machine 5 affiche également, par exemple sur un écran 7, au moins l'une desdites informations de statut de la communication radiofréquence dudit dispositif émetteur/récepteur 2, 3, 4.

Ainsi, grâce à l'invention, ledit système de communication radiofréquence 1 est en mesure de présenter à un opérateur, notamment au pilote de l'aéronef, au moins une information de statut de la communication radiofréquence dudit dispositif émetteur/récepteur 2, 3, 4, en plus de l'information de configuration.

Dans un mode de réalisation particulier, ledit premier moyen d'interface homme/machine 5 est un dispositif de réglage de fréquences, tel qu'un panneau de gestion radiofréquence de type RMP ("Radio Management Panel" en anglais).

Dans un mode de réalisation particulier représenté sur la figure, ledit système de communication radiofréquence 1 comporte :
- une pluralité de dispositifs émetteurs/récepteurs radiofréquence 2, 3, 4, qui sont aptes chacun à émettre et recevoir des données selon ladite norme VDL mode 3, ainsi qu'à recevoir des informations de statut des communications radiofréquence desdits dispositifs émetteurs/récepteurs 2, 3, 4 ; et
- un deuxième moyen d'interface homme/machine 6 susceptible d'afficher par exemple sur un écran 8, sur requête d'un opérateur, une synthèse d'informations de statut relatives à la pluralité desdits dispositifs émetteurs/récepteurs 2, 3, 4.

Ce mode de réalisation permet notamment d'informer le pilote de l'aéronef afin qu'il ait connaissance à tout moment du ou des dispositifs émetteurs/récepteurs 2, 3, 4 qui sont disponibles.

Dans ce cas, ledit deuxième moyen d'interface homme/machine 6 peut être une unité de contrôle et d'affichage multifonction, de type MCDU ("Multipurpose Control and Display Unit" en anglais).

Dans un autre mode de réalisation non représenté, lesdits premier et deuxième moyens d'interface homme/machine 5 et 6 sont intégrés dans une seule et même unité d'interface. De préférence, ladite unité d'interface est un dispositif de réglage de fréquences, tel qu'un panneau de gestion radiofréquence de type RMP ("Radio Management Panel" en anglais").

Par ailleurs, dans un mode de réalisation particulier :
- au moins un dispositif émetteur/récepteur radiofréquence 2, 3, 4 est susceptible de recevoir une information représentative d'une fréquence communiquée par le contrôle aérien pour la communication dudit dispositif émetteur/récepteur radiofréquence 2, 3, 4 ;
- ledit premier moyen d'interface homme/machine 5 affiche, par exemple sur l'écran 7, le cas échéant, ladite information représentative de ladite fréquence communiquée par le contrôle aérien ; et
- ledit premier moyen d'interface homme/machine 5 comporte, de plus, des moyens 9A pour sélectionner et des moyens 9B pour activer ladite fréquence sur ledit dispositif émetteur/récepteur radiofréquence 2, 3, 4.

Ainsi, le système de communication radiofréquence 1 peut alerter le pilote que le canal (ou fréquence) suivant(e) a été transmis(e) automatiquement depuis le sol (par liaison de données) et qu'une saisie manuelle n'est pas nécessaire, et l'inviter à sélectionner et activer cette fréquence, par l'intermédiaire des moyens 9A et 9B.

De plus, ledit premier moyen d'interface homme/machine 5 comporte au moins un indicateur (non représenté) susceptible d'indiquer le cas échéant que ladite fréquence a été communiquée par liaison de données. Cet indicateur permet au pilote de savoir si la fréquence affichée (qu'il peut activer) a été saisie manuellement (indicateur éteint) ou a été reçue par liaison de données (indicateur actif). De préférence, ledit premier moyen d'interface homme/machine 5 comporte au moins deux afficheurs (ou deux zones d'affichage d'un même afficheur, par exemple de l'écran 7) susceptibles d'afficher l'un une fréquence en préparation (par exemple reçue par liaison de données) et l'autre la fréquence active sur le dispositif émetteur/récepteur 2, 3, 4 considéré. L'indicateur est associé à l'affichage de la fréquence en préparation reçue par liaison de données. De préférence, lorsqu'il est actif, cet indicateur est clignotant. De préférence encore, l'affichage de la fréquence reçue est clignotant pendant quelques secondes, afin d'indiquer que cette valeur de fréquence a été reçue par liaison de données (et n'a donc pas été saisie manuellement). Tant que cet affichage clignote, il n'est pas possible de modifier la valeur de la fréquence reçue. Ledit affichage devient ensuite fixe, et il est alors possible de modifier ladite valeur de fréquence reçue. L'indicateur est désactivé soit lors d'une modification de ladite valeur de la fréquence reçue, soit lors de l'activation de cette fréquence (qui est alors affichée sur l'afficheur ou la zone d'affichage correspondant à la fréquence active).

Dans un autre mode de réalisation :
- au moins un dispositif émetteur/récepteur radiofréquence 2, 3, 4 est susceptible de déterminer une information de statut représentative de la possibilité d'utiliser ce dispositif émetteur/récepteur radiofréquence 2, 3, 4 en émission ; et
- ledit système de communication radiofréquence 1 comporte, de plus, des moyens d'alerte 10, 11 précisés ci-dessous, pour alerter un opérateur de l'aéronef lorsqu'il tente d'utiliser ledit dispositif émetteur/récepteur radiofréquence 2, 3, 4 en émission en actionnant l'alternat, alors que l'état de ladite information de statut correspond à une impossibilité d'utiliser en émission ledit dispositif émetteur/récepteur radiofréquence 2, 3, 4 (qui est en mode réception uniquement), par exemple en raison d'une émission en cours par un autre dispositif émetteur/récepteur ou de la préemption du canal par le contrôle aérien.

Dans ce cas, ledit système de communication radiofréquence 1 comporte, de plus, un troisième moyen d'interface homme/machine 12. En outre, lesdits moyens d'alerte 10 sont susceptibles d'activer un signal sonore, par exemple dans un casque 13 d'un pilote de l'aéronef ou dans un haut-parleur du poste de pilotage, et d'activer l'affichage, sur un écran 14 dudit troisième moyen d'interface homme/machine 12, de ladite information de statut correspondant à une impossibilité d'utiliser en émission ledit dispositif émetteur/récepteur radiofréquence 2, 3, 4.

L'alerte sonore et l'affichage disparaissent lorsque le pilote relâche un alternat (situé par exemple sur le manche de pilotage ou sur le premier moyen d'interface 5) et réapparaissent lorsque le pilote actionne à nouveau cet alternat avec un dispositif émetteur/récepteur 2, 3, 4 toujours en mode réception uniquement.

Le son de l'alerte sonore peut correspondre au standard international d'une sonnerie de téléphone occupé (pour être compréhensible par des pilotes de toutes origines) et être composé de deux fréquences (pour pallier une déficience d'audition sur une fréquence particulière).

De préférence, lesdits moyens d'alerte 10 et 11 activent simultanément ledit signal sonore et l'affichage de ladite information de statut, ce qui facilite l'association alerte/action par le pilote (relâchement de l'alternat).

Dans un mode de réalisation préféré :
- ledit troisième moyen d'interface 12 est un dispositif électronique centralisé de surveillance d'aéronef, de type ECAM ("Electronic Centralized Aircraft Monitoring" en anglais) ;
- lesdits moyens d'alerte 10 comportent une unité de gestion audio de type AMU ("Audio Management Unit" en anglais) gérant le fonctionnement audio du casque 13 et d'un microphone 15 ; et
- lesdits moyens d'alerte 11 comprennent un calculateur d'alerte de vol de type FWC ("Flight Warning Computer" en anglais) ou un système d'alerte de vol de type FWS ("Flight Warning System" en anglais), qui est associé audit troisième moyen d'interface 12.

Par ailleurs, dans un mode de réalisation particulier, ledit premier moyen d'interface homme/machine 5 comporte un moyen 16 tel qu'une touche par exemple, permettant à un opérateur de requérir la possibilité d'utiliser un dispositif émetteur/récepteur radiofréquence 2, 3, 4 en émission. Ceci permet notamment à l'opérateur d'alerter le contrôle aérien (par liaison de données) d'un besoin urgent d'émettre (en phonie), en particulier lorsque le dispositif émetteur/récepteur radiofréquence 2, 3, 4 qu'il utilise est bloqué en mode réception uniquement (en phonie).

Ledit système de communication 1 comporte, en outre, un indicateur (non représenté) qui est associé à l'affichage de la fréquence active et qui est apte à indiquer que la requête d'un opérateur (pilote) telle que précitée, a été reçue (et acquittée) par le contrôle aérien. Pour ce faire, le dispositif émetteur/récepteur 2, 3, 4 reçoit une information de statut en provenance du contrôle aérien indiquant que ladite requête a été reçue par le contrôle aérien. Cet indicateur peut correspondre à un voyant lumineux. De préférence, lorsque le pilote appuie sur le moyen 16 (touche) pour faire une requête d'émission, cet indicateur est activé de manière à clignoter, puis l'illumination devient fixe après réception de l'information de statut indiquant la réception de la requête par le contrôle aérien. L'indicateur est désactivé, soit par un nouvel appui du pilote sur le moyen 16 (annulation de la requête d'émission), soit par une émission sur la fréquence considérée (la requête a abouti).

Dans un mode de réalisation particulier, représenté sur la figure :
- le système de communication 1 comporte de plus un calculateur 17, de type ATSU ("Air Traffic Services Unit") dédié au trafic aérien, qui est relié audit deuxième moyen d'interface homme/machine 6 ; et
- les différents éléments précités du système de communication 1 sont reliés ensemble par l'intermédiaire d'une liaison principale L et de liaisons secondaires ℓ.

## Revendications

1. Système de communication radiofréquence pour aéronef, comportant au moins un dispositif émetteur/récepteur radiofréquence (2, 3, 4) apte à émettre et recevoir des données selon une norme VDL mode 3,
**caractérisé en ce que** ledit dispositif émetteur/récepteur radiofréquence (2, 3, 4) est également apte à recevoir des informations de statut d'une communication radiofréquence dudit dispositif émetteur/récepteur radiofréquence (2, 3, 4), une information de statut étant relative à l'état de la liaison radio du dispositif émetteur/récepteur radiofréquence (2, 3, 4) et au moins à la possibilité d'émettre sur une fréquence sélectionnée, **en ce que** ledit système comporte, de plus, un premier moyen d'interface homme/machine (5) qui affiche au moins une information de configuration dudit dispositif émetteur/récepteur radiofréquence (2, 3, 4), qui est relative à la capacité de communication du dispositif émetteur/récepteur fréquence (2, 3, 4), et **en ce que** ledit premier moyen d'interface homme/machine (5) affiche également au moins l'une desdites informations de statut de la communication radiofréquence dudit dispositif émetteur/récepteur radiofréquence (2, 3, 4),

2. Système selon la revendication 1,
**caractérisé en ce qu'**il comporte :
- une pluralité de dispositifs émetteurs/récepteurs radiofréquence (2, 3, 4), aptes à émettre et recevoir des données selon ladite norme VDL mode 3, ainsi qu'à recevoir des informations de statut des communications radiofréquence desdits dispositifs émetteurs/récepteurs radiofréquence (2, 3, 4) ; et
- un deuxième moyen d'interface homme/machine (6) susceptible d'afficher, sur requête d'un opérateur, une synthèse d'informations de statut relatives à la pluralité desdits dispositifs émetteurs/récepteurs radiofréquence (2, 3, 4).

3. Système selon la revendication 2,
**caractérisé en ce que** lesdits premier et deuxième moyens d'interface homme/machine sont intégrés dans une seule et même unité d'interface.

4. Système selon la revendication 3,
**caractérisé en ce que** ladite unité d'interface est un dispositif de réglage de fréquences, du type panneau de gestion radiofréquence.

5. Système selon la revendication 2,
**caractérisé en ce que** ledit deuxième moyen d'interface homme/machine (6) est une unité de contrôle et d'affichage multifonction.

6. Système selon l'une quelconque des revendications précédentes,
**caractérisé en ce que** :
- au moins un dispositif émetteur/récepteur radiofréquence (2, 3, 4) est susceptible de recevoir une information représentative d'une fréquence communiquée par le contrôle aérien pour la communication dudit dispositif émetteur/récepteur radiofréquence (2, 3, 4) ;
- ledit premier moyen d'interface homme/machine (5) affiche, le cas échéant, ladite information représentative de ladite fréquence communiquée par le contrôle aérien ; et
- ledit premier moyen d'interface homme/machine (5) comporte des moyens (9A, 9B) pour sélectionner et activer ladite fréquence sur ledit dispositif émetteur/récepteur radiofréquence (2, 3, 4).

7. Système selon la revendication 6,
**caractérisé en ce que** ledit premier moyen d'interface homme/machine (5) comporte au moins un indicateur susceptible d'indiquer le cas échéant que ladite fréquence a été communiquée par liaison de données.

8. Système selon l'une quelconque des revendications précédentes,
**caractérisé en ce qu'**il comporte :
- au moins un dispositif émetteur/récepteur radiofréquence (2, 3, 4) qui est susceptible de déterminer une information de statut représentative de la possibilité d'utiliser ce dispositif émetteur/récepteur radiofréquence (2, 3, 4) en émission ; et
- des moyens d'alerte (10, 11) pour alerter un opérateur de l'aéronef lorsqu'il tente d'utiliser ledit dispositif émetteur/récepteur radiofréquence (2, 3, 4) en émission, alors que l'état de ladite information de statut correspond à une impossibilité d'utiliser ledit dispositif émetteur/récepteur radiofréquence (2, 3, 4) en émission.

9. Système selon la revendication 8,
**caractérisé en ce qu'**il comporte, de plus, un troisième moyen d'interface homme/machine (12), et **en ce que** lesdits moyens d'alerte (10, 11) sont susceptibles d'activer un signal sonore et d'activer l'affichage, sur ledit troisième moyen d'interface homme/machine (12), de ladite information de statut correspondant à une impossibilité d'utiliser ledit dispositif émetteur/récepteur radiofréquence (2, 3, 4) en émission.

10. Système selon la revendication 9,
**caractérisé en ce que** lesdits moyens d'alerte (10, 11) activent simultanément ledit signal sonore et l'affichage de ladite information de statut.

11. Système selon l'une des revendications 9 et 10,
**caractérisé en ce que** ledit troisième moyen d'interface (12) est un dispositif électronique centralisé de surveillance d'aéronef.

12. Système selon l'une quelconque des revendications précédentes,
**caractérisé en ce que** ledit premier moyen d'interface homme/machine (5) comporte un moyen (16) permettant à un opérateur de requérir la possibilité d'utiliser un dispositif émetteur/récepteur radiofréquence (2, 3, 4) en émission.

13. Système selon la revendication 12,
**caractérisé en ce que** ledit moyen (16) est une touche dudit premier moyen d'interface homme/machine (5).

14. Système selon l'une des revendications 12 et 13,
**caractérisé en ce qu'**il comporte, de plus, un indicateur qui est associé à l'affichage de la fréquence active et qui est susceptible d'indiquer que la requête d'un opérateur pour utiliser un dispositif émetteur/récepteur radiofréquence (2, 3, 4) en émission a été reçue par le contrôle aérien.

15. Aéronef,
**caractérisé en ce qu'**il comporte un système de communication radiofréquence (1) du type de celui spécifié sous l'une quelconque des revendications 1 à 14.

## Patentansprüche

1. Funkverkehrssystem für ein Flugzeug, umfassend mindestens eine Funkfrequenzsende-/-empfangsvorrichtung (2, 3,4), die geeignet ist, Daten nach einer VDL Mode 3 Norm zu senden und zu empfangen,
**dadurch gekennzeichnet, dass** die Funkfrequenzsende-/- empfangsvorrichtung (2, 3, 4) auch geeignet ist, Statusinformationen eines Funkverkehrs von der Funkfrequenzsende-/empfangsvorrichtung (2, 3, 4) zu empfangen, wobei sich eine Statusinformation auf den Zustand der Funkverbindung der Funkfrequenzsende-/-empfangsvorrichtung (2, 3, 4) und mindestens die Möglichkeit, auf einer ausgewählten Frequenz zu senden, bezieht, dass das System ferner ein erstes Mensch/Maschine-Schnittstellenmittel (5) umfasst, das mindestens eine Konfigurationsinformation der Funkfrequenzsende-/empfangsvorrichtung (2, 3, 4) anzeigt, die sich auf die Kommunikationsfähigkeit der Funkfrequenzsende-/-empfangsvorrichtung (2, 3, 4) bezieht, und dass das erste Mensch/ Maschine-Schnittstellenmittel (5) auch mindestens eine der Statusinformationen des Funkverkehrs der Funkfrequenzsende-/-empfangsvorrichtung (2, 3, 4) anzeigt.

2. System nach Anspruch 1,
**dadurch gekennzeichnet, dass** es umfasst:
- eine Vielzahl von Funkfrequenzsende-/-empfangsvorrichtungen (2, 3, 4), die geeignet sind, Daten nach der VDL Mode 3 Norm zu senden und zu empfangen, sowie Statusinformationen des Funkverkehrs der Funkfrequenzsende-/-empfangsvorrichtungen (2, 3, 4) zu empfangen; und
- ein zweites Mensch/Maschine-Schnittstellenmittel (6), das geeignet ist, auf Anfrage eines Betreibers eine Synthese von Statusinformationen bezogen auf die Vielzahl der Funkfrequenzsende-/-empfangsvorrichtungen (2, 3, 4) anzuzeigen.

3. System nach Anspruch 2,
**dadurch gekennzeichnet, dass** die ersten und zweiten Mensch/ Maschine-Schnittstellenmittel in eine einzige und selbe Schnittstelleneinheit integriert sind.

4. System nach Anspruch 3,
**dadurch gekennzeichnet, dass** die Schnittstelleneinheit eine Frequenzregeleinheit vom Typ Funkfrequenzsteuertafel ist.

5. System nach Anspruch 2,
**dadurch gekennzeichnet, dass** das zweite Mensch/Maschine-Schnittstellenmittel (6) eine Multifunktions-Kontroll- und Anzeigeeinheit ist.

6. System nach einem der vorhergehenden Ansprüche,
**dadurch gekennzeichnet, dass**:
- mindestens eine Funkfrequenzsende-/-empfangsvorrichtung (2, 3, 4) geeignet ist, eine Information zu empfangen, die für eine von der Luftfahrtkontrolle für den Funkverkehr der Funkfrequenzsende-/-empfangsvorrichtung (2, 3, 4) übermittelte Frequenz repräsentativ ist;
- das erste Mensch/Maschine-Schnittstellenmittel (5) gegebenenfalls die Information anzeigt, die für die von der Luftfahrtkontrolle übermittelte Frequenz repräsentativ ist; und
- das erste Mensch/Maschine-Schnittstellenmittel (5) Mittel (9A, 9B) umfasst, um die Frequenz auf der Funkfrequenzsende-/-empfangsvorrichtung (2, 3, 4) auszuwählen und zu aktivieren.

7. System nach Anspruch 6,
**dadurch gekennzeichnet, dass** das erste Mensch/Maschine-Schnittstellenmittel (5) mindestens eine Anzeige umfasst, die geeignet ist, gegebenenfalls anzuzeigen, dass die Frequenz über Datenverbindung übermittelt wurde.

8. System nach einem der vorhergehenden Ansprüche,
**dadurch gekennzeichnet, dass** es umfasst:
- mindestens eine Funkfrequenzsende-/-empfangsvorrichtung (2, 3, 4), die geeignet ist, eine Statusinformation zu bestimmen, die für die Möglichkeit der Verwendung dieser Funkfrequenzsende-/-empfangsvorrichtung (2, 3, 4) beim Senden repräsentativ ist; und
- Warnhilfsmittel (10, 11), um einen Betreiber des Flugzeugs zu warnen, wenn er versucht, die Funkfrequenzsende-/-empfangsvorrichtung (2, 3, 4) beim Senden zu verwenden, während der Zustand der Statusinformation einer Unmöglichkeit der Verwendung der Funkfrequenzsende-/- empfangsvorrichtung (2, 3, 4) beim Senden entspricht.

9. System nach Anspruch 8,
**dadurch gekennzeichnet, dass** es ferner eine dritte Mensch/ Maschine-Schnittstelle (12) umfasst, und dass die Warnhilfsmittel (10, 11) geeignet sind, auf der dritten Mensch/Maschine-Schnittstelle ein Lautsignal zu aktivieren und die Anzeige der Statusinformation entsprechend einer Unmöglichkeit, die Funkfrequenzsende-/-empfangsvorrichtung (2, 3, 4) beim Senden zu verwenden, zu aktivieren.

10. System nach Anspruch 9,
**dadurch gekennzeichnet, dass** die Warnhilfsmittel (10, 11) gleichzeitig das Lautsignal und die Anzeige der Statusinformation aktivieren.

11. System nach einem der Ansprüche 9 und 10,
**dadurch gekennzeichnet, dass** das dritte Schnittstellenmittel (12) eine zentralisierte elektronische Überwachungsvorrichtung eines Flugzeugs ist.

12. System nach einem der vorhergehenden Ansprüche,
**dadurch gekennzeichnet, dass** das erste Mensch/Maschine-Schnittstellenmittel (5) ein Mittel (16) umfasst, das es einem Betreiber ermöglicht, die Möglichkeit der Verwendung einer Funkfrequenzsende-/- empfangsvorrichtung (2, 3, 4) beim Senden zu fordern.

13. System nach Anspruch 12,
**dadurch gekennzeichnet, dass** das Mittel (16) eine Taste der ersten Mensch/Maschine-Schnittstelle (5) ist.

14. System nach einem der Ansprüche 12 und 13,
**dadurch gekennzeichnet, dass** es ferner eine Anzeige umfasst, die mit der Anzeige der aktiven Frequenz verbunden und geeignet ist anzuzeigen, dass die Anfrage eines Betreibers zur Verwendung einer Funkfrequenzsende-/-empfangsvorrichtung (2, 3, 4) beim Senden von der Luftfahrtkontrolle empfangen wurde.

15. Flugzeug,
**dadurch gekennzeichnet, dass** es ein Funkverkehrssystem (1) von dem in einem der Ansprüche 1 bis 14 spezifizierten Typ umfasst.

## Claims

1. Radio-frequency communication system for aircraft, comprising at least one radio-frequency transceiver device (2, 3, 4) able to transmit and receive data according to a VDL mode 3 standard,
**characterised in that** said radio-frequency transceiver device (2, 3, 4) is also able to receive status information for a radio-frequency communication of said radio-frequency transceiver device (2, 3, 4), status information relative to the state of the radio connection of the radio-frequency transceiver device (2, 3, 4) and at least the possibility of transmitting on a selected frequency, **in that** said system comprises, in addition, a man/machine interface (5) which displays at least one piece of configuration information of said radio-frequency transceiver device (2, 3, 4), which is relative to the communication capacity of the radio-frequency transceiver device (2, 3, 4), and **in that** said first man/machine interface (5) also displays at least one of the said pieces of status information of the radio-frequency communication of said radio-frequency transceiver device (2, 3, 4).

2. System according to claim 1,
**characterised in that** it comprises:
- a plurality of radio-frequency transceiver devices (2, 3, 4), able to transmit and receive data according to said VDL mode 3 standard, as well as to receive status information of the radio-frequency communications of said radio-frequency transceiver devices (2, 3, 4); and
- a second man/machine interface (6) able to display, upon request from an operator, a summary of the status information relative to the plurality of said radio-frequency transceiver devices (2, 3, 4).

3. System according to claim 2,
**characterised in that** said first and second man/machine interfaces are integrated into a single interface unit.

4. System according to claim 3,
**characterised in that** said interface unit is a frequency regulation device, of the radio-frequency panel type.

5. System according to claim 2,
**characterised in that** said second man/machine interface (6) is a multifunction control and display unit.

6. System as claimed in any preceding claim, **characterised in that**:
- at least one radio-frequency transceiver device (2, 3, 4) is able to receive a piece of information representing a frequency communicated by air traffic control for the communication of said radio-frequency transceiver device (2, 3, 4);
- said first man/machine interface (5) displays, where applicable, said piece of information representing said frequency communicated by air traffic control; and
- said first man/machine interface (5) comprises means (9A, 9B) for selecting and activating said frequency on said radio-frequency transceiver device (2, 3, 4).

7. System according to claim 6,
**characterised in that** said first man/machine interface (5) comprises at least one indicator able to indicate where applicable that said frequency has been communicated by data connection.

8. System as claimed in any preceding claim, **characterised in that** it comprises:
- at least one radio-frequency transceiver device (2, 3, 4) that is able to determine a piece of status information representing the possibility of using this radio-frequency transceiver device (2, 3, 4) for emitting; and
- means of alerting (10, 11) in order to alert an operator of the aircraft when the operator attempts to use said radio-frequency transceiver device (2, 3, 4) for emitting, while the status of said status information correspond to an impossibility of using said radio-frequency transceiver device (2, 3, 4) for emitting.

9. System according to claim 8,
**characterised in that** it comprises, in addition, a third man/machine interface (12), and **in that** said means of alerting (10, 11) are able to activate an audible signal and to activate the display, on said third man/machine interface (12) of said piece of status information corresponding to an impossibility of using radio-frequency transceiver device (2, 3, 4) for emitting,

10. System according to claim 9,
**characterised in that** said means for alerting (10, 11) simultaneously activate said audible signal and the display of said piece of status information.

11. System according to one of claims 9 and 10,
**characterised in that** said third interface means (12) is an electronic centralized aircraft monitoring.

12. System as claimed in any preceding claim,
**characterised in that** said first man/machine interface (5) comprises a means (16) allowing an operator to request the possibility of using a radio-frequency transceiver device (2, 3, 4) for emitting.

13. System according to claim 12,
**characterised in that** said means (16) is a button of said first man/machine interface (5).

14. System according to one of claims 12 and 13,
**characterised in that** it comprises, in addition, an indicator that is associated with the display of the active frequency and which is able to indicate that the request of an operator to use a radio-frequency transceiver device (2, 3, 4) for emitting has been received by air traffic control.

15. Aircraft,
**characterised in that** it comprises a radio-frequency communication system (1) of the type specified in any of claims 1 to 14.
